Europäisches Patentamt

(19) European Patent Office

Office européen des brevets

(11) Veröffentlichungsnummer: **0 086 984**
**B1**

(12) **EUROPÄISCHE PATENTSCHRIFT**

(45) Veröffentlichungstag der Patentschrift:
09.04.86

(21) Anmeldenummer: 83100731.5

(22) Anmeldetag: 27.01.83

(51) Int. Cl.⁴: **F 16 L 1/04,** F 16 L 37/00,
F 16 L 39/02

(54) **Mehrfachkupplung mit Sperrkugelverriegelung.**

(30) Priorität: 06.02.82 DE 3204116

(43) Veröffentlichungstag der Anmeldung:
31.08.83 Patentblatt 83/35

(45) Bekanntmachung des Hinweises auf die Patenterteilung:
09.04.86 Patentblatt 86/15

(84) Benannte Vertragsstaaten:
DE FR GB

(56) Entgegenhaltungen:
DE - A - 3 023 359
DE - C - 2 146 097
FR - A - 2 362 327
GB - A - 1 169 599
GB - A - 1 237 816
GB - A - 2 064 039
US - A - 3 604 731

(73) Patentinhaber: Carl Kurt Walther GmbH & Co. KG,
Bahnstrasse 43-51 Postfach 11 06 42,
D-5600 Wuppertal 11 (DE)

(72) Erfinder: Momberg, Wolfgang, Magdalenenstrasse 50,
D-5600 Wuppertal 1 (DE)

(74) Vertreter: Rieder, Hans-Joachim, Dr.,
Corneliusstrasse 45 Postfach 11 04 51,
D-5600 Wuppertal 11 (DE)

## Beschreibung

Die Erfindung bezieht sich auf eine Mehrfachkupplung mit plattenförmigen Kupplungshälften, in denen die medienführenden Stecker- und Muffenteile der Einzelkupplungen befestigt sind, welche plattenförmigen Kupplungshälften zueinander zapfenzentriert und durch Sperrkugelverriegelung in Kupplungsstellung zueinander lösbar gehalten sind derart, daß ein Patrizenvorsprung der einen Kupplungshälfte in eine Matrizenöffnung der anderen Kupplungshälfte eintritt und dort von Sperrkugeln, die durch Verlagern einer Verriegelungshülse in die Offenstellung freigebbar sind, gehalten ist, wobei Patrizenvorsprung und Matrizenvorsprung jeweils etwa zentrisch zur jeweiligen Kupplungshälfte angeordnet sind, und einem Zugglied zum Schließen der Kupplung.

Eine Menrfachkupplung dieser Art ist durch die DE-A-3 023 359 bekannt. Solche Einrichtungen ermöglichen es, den vollständigen Versorgungsbedarf einer Anlage über einen einzigen Kupplungsschritt abzudecken. Je nach dem Leitungsquerschnitt der Zuleitungen entsteht an der einen Kupplungshälfte eine erhebliche Last, die das Herbeiführen der Kupplung vor allem bei hängender Anordnung sehr erschwert. Um hier Abhilfe zu schaffen, greift der Patrizenvorsprung verrastend in die Matrizenöffnung der anderen Kupplungshälfte ein, welche Matrize auf diese Weise praktisch ein Zugglied bildet zum Öffnen und Schliefen der Kupplung. Beide Kupplungshälften sind überdies auf besonderen Tragstangen geführt. Solche an sich vorteilhaften Führungselemente sind für Kupplungen, bei denen zwischen den beiden Hälften größere Distanz belassen ist, nachteilig. Eine lineare Gebundenheit schränkt den ohnehin knappen Freiraum bspw. von Offshore-Einrichtungen unnötig ein. Das Bewegen von plattenförmigen Kupplungshälften, welche medienführende Anschlüsse für die festen Kupplungshälften aufweisen, mittels eines Seilzuges ist bei gattungsgemäß anderen Lösungen vorbekannt (vergl. GB-A-2 064 039; Figuren 1, 8; FR-A-2 362 327, Figuren 10, 14; US-A-3 604 731, Figuren 1, 4; GB-A-1 237 816, Figuren 6, 7; GB-A-1 169 599, Figuren 1, 2). Dort verläuft der Seilzug aber überwiegend dezentral. Letzteres kann zu Verkippungen führen. Die Schließkräfte werden nicht optimal eingeleitet. Außerdem sind meist aufwendige Zusatzeinrichtungen für die Endausrichtung der seitlich zum Zugseilangriff erfolgenden Kupplung erforderlich. Eine Lösung, bei der ein zentraler Zugseilangriff am Patrizenvorsprung erfolgt (GB-A-1 237 876) muß der Kopf des Patrizenvorsprunges vom Innenraum einer Unterwasserstation her völlig demontiert werden, um den Leitungsanschluß zu bewerkstelligen. Zur übrigen sind dort, wie bei den anderen vorbekannten Lösungen, nach zeihen in Kupplungsrichtung noch weitere Maßnahmen notwendig, um die vollendete Kupplungsstellung harbeizuführen.

Aufgabe der Erfindung ist es, eine gattungsgemäße Mehrfach kupplung in herstellungstechnisch einfacher, gebrauchsvorteilhafter Weise so auszubilden, daß -unter Verzicht auf platzraubende Führungselemente sowie Zusatzeinrichtungen zur Justierung- bei trotzdem sicherer und kräftegünstig einzuleitender Verbindung der Kupplungshälften eine erleichterte Bedienung erreicht wird.

[Hieran schließt an Seite 2, Zeile 4 der Beschreibung vom 25.1.1983: "Gelöst ist diese Aufgabe..."].

Gelöst ist diese Aufgabe durch die im Anspruch 1 angegebene Erfindung.

Die Unteransprüche sind vorteilhafte Weiterbildungen der erfindungsgemäßen Mehrfachkupplung.

Zufolge solcher Ausgestaltung ist die Bedienung einer gattungsgemäßen Mehrfachkupplung erleichtert. Der am weitesten vorspringende Teil der zuzuführenden Kupplungshälfte, nämlich der Patrizenvorsprung, wird praktisch selbstzentrierend in die Matrizenöffnung der stationären Kupplungshälfte eingezogen. Letztere stellt somit in vorteilhafter Weise eine Führungsöse für das über die Anfassung mit dem Patrizenvorsprung gekuppelte Zugglied dar. Hinzu kommt der Vorteil, daß dieser Bereich auch die Verriegelungszone ist. Die Mehrfachkupplung läßt sich in vorteilhafter Weise als zentrales System ausbilden, also mit konzentrisch um den zentralen Patrizenvorsprung gruppierten Einzelkupplungen bestücken. Als Zugglied ist ein Seil denkbar, so daß auch größere Niveauunterschiede bei geringstem Raumbedarf überwunden werden können; das Seil kann mit Hilfe einer Winsch betätigt und raumsparend aufgewickelt werden. Der Einzug über die Matrizenöffnung gibt dem meist in einem Schlauch untergebrachten Leitungsbündel schon frühzeitig die richtige Ausrichtung beim Hochziehen in die höherliegende Kupplungsposition. Insoweit läßt sich der Patrizenvorsprung auch vorteilhaft als Zentrierungszapfen der Mehrfachkupplung nutzen. Handelt es sich um unterschiedlich ausgelegte Einzelkupplungen oder solche unterschiedlicher Bestimmung, so ist dieser Version durch einen außermittig angeordneten Orientierungszapfen der einen Kupplungshälfte zu begegnen, welcher formpassend in eine Öffnung der anderen Kupplungshälfte einfährt. Beim Einzug hat der Bedienende nur darauf zu achten, daß eine gewisse Vor-Ausrichtung eingehalten wird. Die entsprechend hier anzuwendenden Drehkräfte sind jedoch gering, da die Last praktisch ausschließlich am Zugglied wirksam ist. Auch die das Lösen der Mehrfachkupplung bringenden Mittel sind bedienungseinfach gestaltet insofern, als die andere Kupplungshälfte zur Betätigung der Verriegelungshülse sekantenförmige Aussparungen besitzt, in welche gabelförmig angeordnete Arme eines doppelarmigen Auslösehebels eingreifen. Um die medienführenden Leitungen selbst zugbelastungsfrei zu halten, ist eine Verbindung dahingehend gewählt, daß koaxial zum Patrizenvorsprung an der gegenüberliegenden Plattenseite der Kupplungshälfte eine zentrale Halterung für die zu einem Bündel zusammengefaßten Medienleitungen vorgesehen ist. Die eigentliche Lastaufnahme kann bspw. an einem zentrisch liegenden Seil aus korrosionsbeständigem Material bestehen, gegebenenfalls aus Nylon. Die Anfassung ist in vorteilhafter Weise von einer Schnellkupplungshälfte gebildet, wobei am Ende des Zuggliedes die entsprechende Gegenhälfte sitzt. Mittel dieser Art haben den Vorteil einer schnellen, bequemen Steckzuordnung; durch den rotationssymmetrischen Aufbau entsprechender Kupplungen läßt sich auch die Drehfreiheit erhalten. Um die die Kupplungshälften miteinander verbindende Verriegelungshülse selbst weitestgehend belastungsfrei, andererseits aber die Lastaufnahme über die Sperrkugeln zu optimieren, ist eine Ausgestaltung dahingehend gewählt, daß die Stützpunkte der Verriegelungskugeln sich auf einer spitzwinklig zur Längsmittelachse des Patrizenvorsprunges stehenden Durchmesserlinie der Verriegelungskugeln gegenüberliegen. Hierbei ist es von Vorteil, daß sich die Abstütz-Durchmesserlinien aller Verriegelungskugeln in einer Kegelspitze, die in der Mittelachse des Patrizenvorsprunges liegt, schneiden. Insofern ist auch hier eine dem Zentralsystem der Mehrfachkupplung bestens angepaßte Abstützung erreicht, die andererseits das Verlagern der selbst praktisch nicht belasteten Verriegelungshülse unter Aufbringung geringer Betätigungskräfte ermöglicht.

Weitere Vorteile und Einzelheiten des Gegenstandes der Erfindung sind nachstehend anhand eines zeichnerisch veranschaulichten Ausführungsbeispieles näher erläutert. Es zeigt

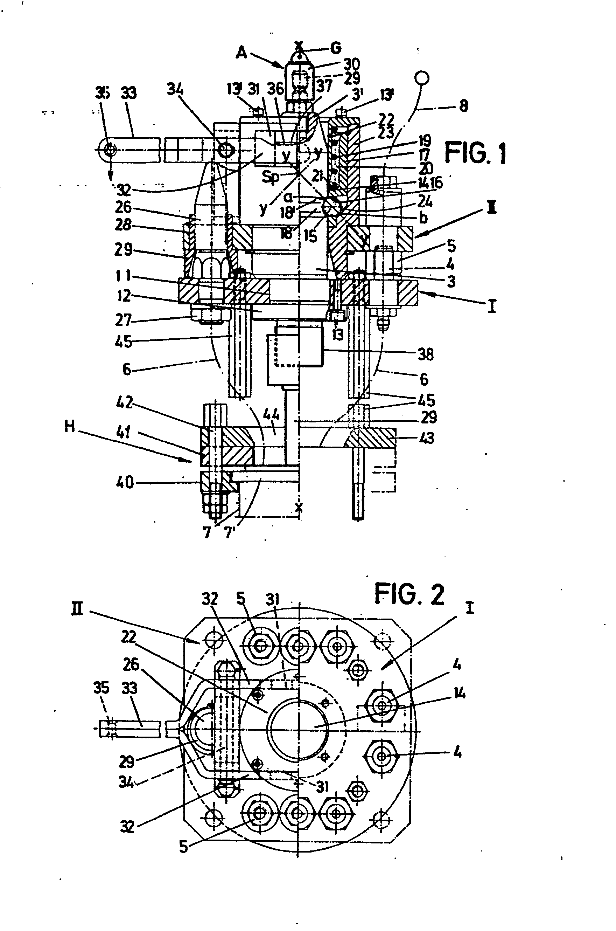

Fig. 1 die erfindungsgemäß ausgebildete Mehrfachkupplung im vertikalen Teilschnitt, und zwar in Kupplungsstellung,

Fig. 2 die Draufsicht hierzu in verschiedenen Ebenen und

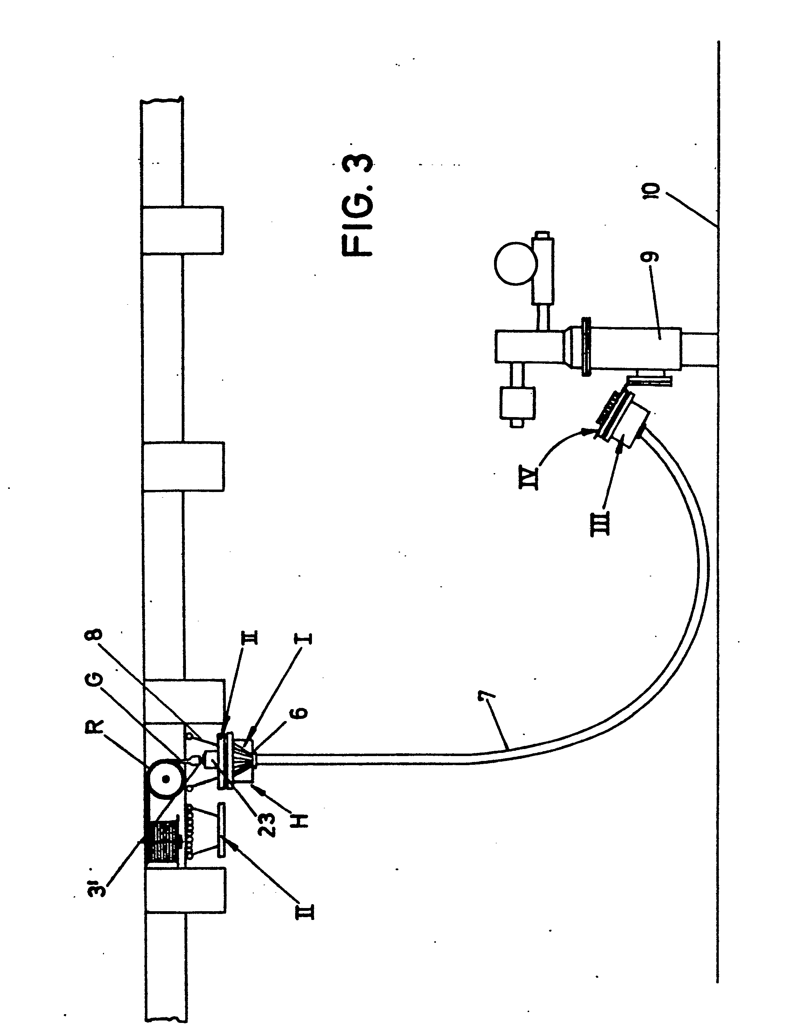

Fig. 3 ein beispielsweiser Anwendungsvorschlag auf einem Bohrturm, einer Bohrinsel oder dergleichen.

Die dargestellte Mehrfachkupplung besteht aus zwei plattenförmigen Kupplungshälften I und II. Die Platten sind kreisrunden und/oder quadratischen Grundrisses.

Die eine Kupplungshälfte I trägt im Zentrum einen nach oben weisenden, zylindrischen, im Kopfbereich kegelstumpfförmig ausgebildeten Patrizenvorsprung 3. Konzentrisch um diesen gruppiert liegen Steckerteile 4, die mit entsprechend angeordneten Muffenteilen 5 der anderen Kupplungshälfte verbindbar sind. Sie bilden Einzelkupplungen unterschiedlicher Art und Größe.

Die Steckerteile 4 sind an der Unterseite der einen Kupplungshälfte I mit Medienleitungen 6 bestückt, welche in einem Schlauch 7 als Bündel zusammengeführt sind.

Von der Oberseite der anderen Kupplungshälfte II geht eine Anzahl entsprechender Versorgungsleitungen 8 aus. Die Leitungen 8 führen zu den einzelnen Medienquellen.

Das andere Ende des Schlauches mündet in eine der Kupplungshälfte I entsprechende Kupplungshälfte III, die mit einer stationären Kupplungshälfte IV in Verbindung gebracht werden kann. Letztere sitzt am Sockel eines Bohrgeschirrs 9 einer Bohrplattform 10 und führt dem Bohrgeschirr die benötigten Medien zu.

Der Patrizenvorsprung 3 ist als Drehteil gestaltet. Er durchsetzt von unten her eine zentrale Bohrung 11 der Platte der einen Kupplungshälfte I. Der Bohrungsrand wird unten von einem Befestigungsflansch 12 unterfangen. Die ihn halternden Schrauben sind mit 13 bezeichnet.

Der Patrizenvorsprung 3 fährt zum kuppelnden Eingriff in eine querschnittsentsprechende Matrizenöffnung 14 der anderen Kupplungshälfte II ein. Im Fugenbereich von Patrizenöffnung 3 und Matrizenvorsprung 14 befinden sich ausrückbare Sperrkugeln 15. Letztere lagern in radial gerichteten konischen Bohrungen 16 einer anschlagbegrenzt verschieblich geführten, federbelasteten Verriegelungshülse 17. Die konischen Bohrungen 16 sind so bemessen, daß die Sperrkugeln 15 nicht in die Matrizenöffnung 14 hineinfallen können, sondern nur in dem zur Herbeiführung der Verriegelungsstellung benötigten Maß einwärts gerichtet vortreten. In dieser Stellung ragen sie in eine im Querschnitt gesehen trapezförmige Ringnut 18 des Patrizenvorsprungs 3, welche auf halber Höhe desselben liegt.

Die Verriegelungshülse 17 steht unter Belastung einer Druckfeder 19. Es handelt sich um eine Schraubengangdruckfeder. Letztere sitzt in einer durch Ausdrehen der Verriegelungshülse 17 erzielten Federkammer 20. Die Ausdrehung ist so vorgenommen, daß eine Stützschulter 21 für die dortige endständige Windung der Druckfeder 19 vorliegt. Die andere endständige Windung stützt sich auf dem auswärts gerichteten Kragen einer die Matrizenöffnung 74 mitbildenden Büchse 22 ab. Letztere ist an einem rotationssymmetrisch gestalteten, die Führung für die Verriegelungshülse bildenden Gehäuse 23 angeschraubt. Die Schrauben sind mit 13' bezeichnet.

Die Druckfeder 19 belastet die Verriegelungskugeln 15 mittelbar im Sinne des Verriegelungseingriffs. Die Stützpunkte a und b der Verriegelungskugeln 15 liegen auf einer spitzwinklig (45°) zur Längsmittelachse x-x des Patrizenvorsprungs 3 ausgerichteten Durchmesserlinie y-y. Der Stützpunkt a wird dabei von der oberen Flanke 18' der Ringnut 18 und der untere Stützpunkt b von einer im wesentlichen parallel ausgerichteten Flanke 24 des anderen Matritzenteiles, genauer des Gehäuses 23 gebildet. Die Flanken 18' und 24 erstrecken sich senkrecht zur Abstütz-Durchmesserlinie y-y. Die Verriegelungshülse 17 selbst ist dabei praktisch belastungsfrei gehalten. Unter Berücksichtigung der Tatsache, daß die Verriegelungskugeln 15 in enger Folge in einer umlaufenden Reihe angeordnet sind, schneiden sich die Abstütz-Durchmesserlinien y-y sämtlicher Verriegelungskugeln 15 in einer "Kegelspitze" Sp, die in der Mittelachse x-x des Patrizenvorsprunges 3 liegt.

Außer dem zentrierend wirkenden Patrizenvorsprung 3 kann bei unterschiedlich ausgebildeten Einzelkupplungen zur Sicherung der betriebsgerechten Zuführung der einen Matrizenhälfte I dezentral ein weiterer, projektilartig zugespitzter Orientierungszapfen 26 vorgesehen sein. Letzterer ist ebenfalls aufwärts gerichtet und rückseitig der einen Kupplungshälfte I bei 27 verschraubt. Zum formpassenden Eintritt dieses nach oben gerichteten Orientierungszapfens 26 bildet die andere Kupplungshälfte II eine Öffnung 28 aus. Sie ist von einer Büchse 29 gebildet, welche in einer Bohrung der Platte der dortigen Kupplungshälfte sitzt. Einlaufseitig ist die Büchse 29 trichterförmig erweitert.

Der Patrizenvorsprung 3 ist an seinem freien, oberen Ende 3' mit einer querschnittskleineren Anfassung A für ein die Matrizenöffnung 14 durchsetzendes, vorzugsweise in Form eines Seiles ausgebildetes Zugglied G versehen. Das Zugglied G kann mit Hilfe einer Winsch zu einer Rolle R aufgewickelt werden. Die Winsch befindet sich bspw. unterhalb der Decke der Plattform 10, also im Bereich der Versorgungsleitungen 8. Der Patrizenvorsprung 3 wird auf diese Weise durch die praktisch eine Führungsöse bildende Matrizenöffnung 14 der ortsfesten Kupplungshälfte II in die betriebsgerechte Kupplungsstellung eingezogen. Da der Kupplungszapfen von einer Länge ist, die der der Matrizenhöhlung entspricht, liegt die Anfassung A dann zu einem etwaigen Lösen frei.

Die Anfassung A ist von einer in den Patrizenvorsprung 3 eingeschraubten Schnellkupplungshälfte 29 gebildet. Das dortige Ende des Zuggliedes G stellt die Gegenhälfte 30 dar, also bspw. die über eine Verriegelungshülse sicherbare Matrizenhälfte der Schnellkupplung. Diese Kupplungshälften sind rotationssymmetrisch aufgebaut, so daß eine freie Drehung gewährleistet ist. Das Zugglied G greift über eine Öse an.

Zur Aufhebung der Kupplungsverbindung ist es nur erforderlich, die Anfassung wieder mit dem Kupplungszapfen 3 zu verbinden (falls ein vorheriges Lösen stattgefunden hat) und die Verriegelungshülse 17 entgegen der Kraft der Druckfeder 19 zu verschieben. Hierbei werden die Verriegelungskugeln 15 aus dem Bereich der sperrend wirkenden Flanke 18' der Ringnut 18 nach auswärts verlagert. Sie treten dann in einen radial liegenden auswärts gerichteten Ausweichringraum hinter der Bohrung 17 ein. Für die Zugänglichkeit der Hülse ist das Gehäuse 23 an diametral einander gegenüberliegenden Seiten mit sekantenförmigen, fensterbildenden Aussparungen 31 versehen, in welche gabelförmig angeordnete Arme 32 eines doppelarmig ausgebildeten Auslösehebels 33 eingreifen. Letzterer schwenkt um einen ortsfesten, horizontal ausgerichteten Gelenkzapfen 34 eines Lagerböckchens. Das praktisch einen Stiel bildende freie Ende des doppelarmigen Auslösehebels 33 weist eine Öse 35 auf zum Anbringen eines Zugmittels. Die Zugrichtung ist durch Pfeil kenntlich gemacht.

Auch die Verriegelungshülse 17 weist im Bereich der Aussparung 31 eine sekantenförmige Ausnehmung 36 auf. Hierdurch entsteht eine horizontal ausgerichtete Schulter 37, die von der Oberseite der gabelförmig angeordneten Arme 32 untergriffen werden kann. Die Schulter 37 liegt in dem für den Hub erforderlichen Abstand in Grundstellung unterhalb der Decke der Aussparung 31.

Das schlauchseitige Ende des Patrizenvorsprunges 3 setzt sich in einen Gewindebolzen 38 fort. Hiermit ist ein zentrales Seil 39 schraubverbunden. Letzteres durchsetzt zentral den die Medienleitungen 6 tragenden Schlauch 7. Das dortige freie Ende des Schlauches 7 ist zu einem Kragen 7' gestaltet. Letzterer und das Seil 39 sind Bestandteil einer die Medienleitungen belastungsfrei lassenden Halterung H. Der Kragen 7' ist zwingenartig zwischen einer Backe 40 und einer Gegenhalteplatte 41 eingespannt. Das ganze hängt, über Schrauben 42 gehalten, an einer Platte 43 mit zentraler Durchbrechung 44. Deren Durchbrechungsrand ist dem Bündelungsverlauf der Medienleitungen 6 entsprechend trichterförmig gestaltet. Die Platte 43 hängt über Säulenstücke 45, die mit der Platte der einen Kupplungshälfte I verschraubt sind, an dieser. Es sind insgesamt vier solcher Säulenstücke 45 vorgesehen, so daß eine ausgewogene Festlegung der Platte 43 erreicht ist. Der Abstand zwischen der Platte der einen Kupplungshälfte I und der Platte 43 ist so, daß das Seil 39 bequem, bspw. unter Verwendung einer Überwurfmutter am Schraubbolzen 38 festgelegt werden kann.

Die Entriegelung kann auch mechanisch bzw. pneumatisch erfolgen. Auch ist nach wie vor eine Bedienung von Hand möglich ohne die Winschbetätigung (Erfassen der Säulenstücke 45).

## Patentansprüche

1. Mehrfachkupplung mit plattenförmigen Kupplungshälften (I, II), in denen die medienführenden Stecker- und Muffenteile (4, 5) der Einzelkupplungen befestigt sind, welche plattenförmigen Kupplungshälften zueinander zapfenzentriert und durch Sperrkugelverriegelung in Kupplungsstellung zueinander lösbar gehalten sind derart, daß ein Patrizenvorsprung (3) der einen Kupplungshälfte (I) in eine Matrizenöffnung (14) der anderen Kupplungshälfte (II) eintritt und dort von Sperrkugeln (15), die durch Verlagern einer Verriegelungshülse (17) in die Offenstellung freigebbar sind, gehalten ist, wobei Patrizenvorsprung (3) und Matrizenvorsprung (14) jeweils etwa zentrisch zur jeweiligen Kupplungshälfte angeordnet sind, und einem Zugglied zum Schließen der Kupplung, dadurch gekennzeichnet, daß das Zugglied in Form eines an einer querschnittskleineren Anfassung (A) des Patrizenvorsprunges (3) befestigten, die Matrizenöffnung (14) durchsetzenden Seiles (G) oder dergleichen ausgebildet ist und das über das Seil bewirkte Einziehen der Kupplungshälfte (I) in der Kupplungsrichtung bis in die vollendete Kupplungsstellung der medienverbindenden Stecker-und Muffenteile (4, 5) erfolgt. [Hieran schließen an die Ansprüche 2-8 der Fassung vom 27.1.1983]

2. Mehrfachkupplung nach Anspruch 1, dadurch gekennzeichnet, daß der Patrizenvorsprung (3) als Zentrierzapfen ausgebildet ist.

3. Mehrfachkupplung nach Anspruch 1, gekennzeichnet durch einen außermittig angeordneten Orientierungszapfen (26) der einen Kupplungshälfte (I), welcher formpassend in eine Öffnung (28) der anderen Kupplungshälfte (II) einfährt.

4. Mehrfachkupplung nach Anspruch 1, dadurch gekennzeichnet, daß die andere Kupplungshälfte (II) zur Betätigung der Verriegelungshülse (17) sekantenförmige Aussparungen (31) besitzt, in welche gabelförmig angeordnete Arme (32) eines doppelarmigen Auslösehebels (33) eingreifen.

5. Mehrfachkupplung nach Anspruch 1, dadurch gekennzeichnet, daß koaxial zum Patrizenvorsprung (3) an der gegenüberliegenden Plattenseite der Kupplungshälfte (I) eine zentrale Halterung (H) für die zu einem Bündel zusammengefaßten Medienleitungen (6) vorgesehen ist.

6. Mehrfachkupplung nach Anspruch 1, dadurch gekennzeichnet, daß die Anfassung (A) von einer Schnellkupplungshälfte (29) gebildet ist und am dortigen Ende des Zuggliedes (G) die Gegenhälfte (30) sitzt.

7. Mehrfach kupplung nach Anspruch 1, dadurch gekennzeichnet, daß die Stützpunkte (a und b) der Verriegelungskugeln (15) auf einer spitzwinklig zur Längsmittelachse (x-x) des Patrizenvorsprunges (3) stehenden Durchmesserlinien (y-y) der Verriegelungskugeln (15) diametral gegenüberliegen.

8. Mehrfachkupplung nach Anspruch 7, dadurch gekennzeichnet, daß die Abstütz-Durchmesserlinien (y-y) aller Verriegelungskugeln (15) sich in einer Kegelspitze (Sp), die in der Mittelachse (x-x) des Patrizenvorsprunges (3) liegt, schneiden.

## Claims

1. A multiple coupling having couplin halves (I, II) in the form of plates into which the media-carrying plug and socket parts (4, 5) of the individual couplings are fastened the said coupling halves in the form of plates being centred with respect to one another by dowels and being held detachably with respect to one another in the coupling position through locking by ball catch in such a way that a male projection (3) on the one coupling half (I) enters a female opening (14) on the other coupling half (II) and is held there by ball catches (15) which may be released by displacement of a locking sleeve (17) into the open position, where the male projection (3) and the female projection (14) are arranged in each case about in the centre of the respective coupling half, and having a tension member for closing the coupling, characterized in that the tension member is made in the form of a rope (G) fastened to a grip (A) of smaller cross-section on the male projection (3) and passing through the female opening (14), or the like, and the pulling-in of the coupling half (I) brought about via the rope is effected in the coupling direction right up to the final coupling position of the plug and socket parts (4, 5) connecting the media.

2. A multiple coupling as in Claim 1, characterized in that the male projection (3) is made as a centreing dowel.

3. A multiple coupling as in Claim 1, characterized by an orientation dowel (26) arranged offcentre on the one coupling half (I), which enters with a close fit into an opening (28) in the other coupling half (II).

4. A multiple coupling as in Claim 1, characterized in that the other coupling half (II) for actuation of the locking sleeve (17) has secant-shaped recesses (31) in which engage arms (32) arranged in the form of a fork on a two-armed release lever (33).

5. A multiple coupling as in Claim 1, characterized in that coaxially with the male projection (3) on the opposite side of the plate of the coupling half (I) a central mounting (H) is provided for the media leads (6) which are gathered into a bundle.

6. A multiple coupling as in Claim 1, characterized in that the grip (A) is formed of one half (29) of a rapid-action coupling and the mating half (30) is seated on that end of the tension member (G).

7. A multiple coupling as in Claim 1, characterized in that the points of support (a and b) of the locking balls (15) lie diametrically opposite one another on a diameter (y-y) of the locking balls (15), which lies at an acute angle to the longitudinal centreline (x-x) of the male projection (3).

8. A multiple coupling as in Claim 7, characterized in that the diameters of bearing (y-y) of all of the locking balls (15) intersect at the apex (Sp) of a cone, which lies on the centreline (x-x) of the male projection (3).

## Revendications

1.- Coupleur multiple comportant des demi-accouplements (I, II) en forme de plateau, dans lesquels sont fixées les parties fiches et douilles (4, 5) d'alimentation en fluide des coupleurs individuels, lesdits demi-accouplements en forme de plateau étant centrées mutuellement par broches et étant maintenus mutuellement, de façon séparable, par un verrouillage à bille d'arrêt en position de couplage, de telle sorte qu'une saillie mâle (3) de l'un des demi-accouplements (I) pénètre dans une ouverture femelle (14) de l'autre demi-accouplement (II) et soit maintenu dans cette position par des billes d'arrêt (15) qui peuvent être libérées par déplacement d'un fourreau de verrouillage (17) dans la position d'ouverture, la saillie mâle (3) et l'ouverture femelle (14) étant disposées respectivement de façon sensiblement centrée par rapport au demi-accouplement correspondant, et un organe de traction étant prévu pour la fermeture du coupleur, caractérisé en ce que l'organe de traction est agencé sous la forme d'un câble (G) ou analogue fixé sur une partie d'accrochage (A) de plus petite section de la saillie mâle (3) et traversant l'ouverture femelle (14) et en ce que le tirage, par l'intermédiaire du câble, du demi-accouplement (I) dans la direction d'accouplement des parties fiches et douilles (4, 5) d'alimentation en fluides est assuré jusque dans la position finale d'accouplement.

2.- Coupleur multiple selon la revendication 1, caractérisé en ce que la saillie mâle (3) est réalisée sous la forme d'une broche de centrage.

3.- Coupleur multiple selon la revendication 1, catactérisé par une broche d'orientation (26) désaxée par rapport à (I) des demiaccouplements et qui traverse de façon ajustée une ouverture (28) de l'autre demi-accouplement (II).

4.- Coupleur multiple selon la revendication 1, caractérisé en ce que l'autre demi-accouplement (II) comporte des évidements (31) de forme sécante pour l'actionnement du manchon de verrouillage (17) et dans lesquels viennent se loger des bras (32) en forme de fourche d'un levier de libération (33) à double bras.

5.- Coupleur multiple selon la revendication 1, caractérisé en ce qu'il comporte coaxialement à la saillie mâle (3) sur le côté opposé des plateaux des demi-accouplements (I), un support central (H) pour les conduites de fluide (6) à assembler en un faisceau.

6.- Coupleur multiple selon la revendication 1, caractérisé en ce que la partie d'accrochage (A) est constituée par une moitié (29) d'un accouplement rapide tandis que la moitié antagoniste (30) est montée à l'extrémité correspondante de l'organe de traction (G).

7.- Coupleur multiple selon la revendication 1, caractérisé en ce que les points d'appui (a et b) des billes de verrouillage (15) sont placés dans des positions diamétralement opposées sur une ligne diamétrale (y-y) des billes de verrouillage (15) faisant un angle aigu avec l'axe central longitudinal (x-x) de la saillie mâle (3).

8.- Coupleur multiple selon la revendication 7, caractérisé en ce que les lignes diamétrales d'appui (y-y) de toutes les billes de verrouillage (15) se coupent en un sommet de cône (Sp) qui est situé sur l'axe central (x-x) de la saillie mâle (3).

FIG. 1

FIG. 2

FIG. 3

0 086 984